# DEMANDE DE BREVET EUROPEEN

(11) **EP 4 657 992 A1**
(43) Date de publication de la demande: **03.12.2025**
(21) Numéro de dépôt: 25172594.1
(22) Date de dépôt: 25.04.2025
(51) Int. Cl.: H05B 47/105, H05B 47/11, H05B 47/115, H05B 47/19, F21V 23/04

(54) **LAMPE FRONTALE DOTÉE D'UNE INTERFACE UTILISATEUR AMÉLIORÉE POUR UNE GESTION D'UNE AUTONOMIE DE LA BATTERIE**

(30) Priorité: 29.05.2024 EP 24315251
(71) Demandeur: Zedel, 38920 Crolles (FR)
(72) Inventeur: Beaurent, Nicolas, 38570 La Pierre (FR)
(74) Mandataire: Schuffenecker, Thierry

(57) **Abrégé**

**1.** Une lampe frontale comportant (700) comportant
- une source lumineuse;
- un bouton poussoir (710) de commande de la lampe ;
- un module de puissance pour générer une alimentation en courant de ladite source lumineuse,
- un afficheur à M segments (720) servant à l'affichage de l'état de charge de la batterie ;
- un module de commande pour le réglage de l'intensité lumineuse générée par ladite source lumineuse;
- un accéléromètre configuré pour fournir à intervalles réguliers des données représentatives d'une accélération de la lampe frontale suivant au moins un axe horizontal X1 et un axe vertical Y1;
dans lequel ledit module de commande est configuré pour stocker et traiter numériquement les données représentatives de ladite accélération ;
caractérisé en ce que
le module de commande est en outre configuré pour

- effectuer un traitement numérique desdites données d'accélérométrie captées dans le but de détecter un ensemble de N>2 tapotements consécutifs et, consécutivement à ladite détection d'entrer dans un mode de programmation d'une autonomie de la batterie ; et
- dans ledit mode de programmation, procéder suite à chaque nouvelle action sur ledit bouton poussoir à un défilement circulaire de l'affichage desdits segments LED , chacun desdits segments LED correspondant à une unité d'autonomie.

## Description

### Domaine Technique

La présente invention concerne le domaine des lampes frontales dotées d'un système de gestion d'une autonomie de la batterie de la lampe, et notamment d'une lampe frontale comportant une interface utilisateur améliorée pour cette gestion.

### Etat de la Technique

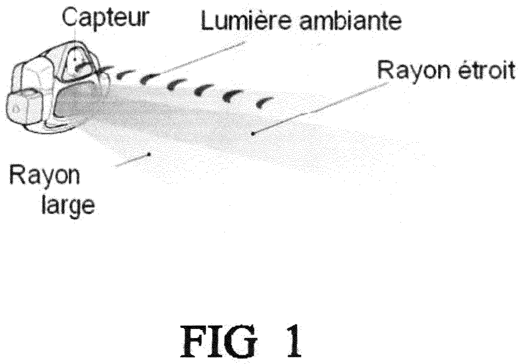

La demanderesse de la présente demande de brevet a conçu diverses lampes frontales comportant une gestion de l'autonomie de la batterie. Une lampe frontale en particulier est dotée d'un éclairage dit *réactif* ou *dynamique* dont le principe de fonctionnement est illustré dans la figure 1. Cette lampe frontale comporte un circuit électronique doté d'un capteur qui analyse la luminosité extérieure pour délivrer instantanément une puissance d'éclairage réglée ainsi qu'une géométrie de faisceau optimale pour la situation considérée.

Ce type de lampes s'est avérée être particulièrement adaptée aux activités et sports intensifs car elles soulagent l'utilisateur des réglages en mode manuel qui seraient nécessaires pour commuter entre différents seuils de puissance de faisceaux. En particulier, elles permettent à un utilisateur de garder les mains libres et l'esprit totalement concentré sur l'activité qui est la sienne et ce quelle que soit la situation d'éclairage considérée.

En éclairage de proximité par exemple, l'utilisateur peut ainsi observer ou examiner un objet à courte distance (lecture d'une carte, confection d'un nœud d'encordement ou montage d'une tente par exemple) et la lampe peut produire un faisceau lumineux très large et peu puissant, fixé automatiquement à une valeur seuil minimale grâce à cette technique d'éclairage dynamique. L'éclairage s'adapte automatiquement à la distance de l'objet.

En revanche, en situation de mouvement par exemple lorsque l'utilisateur s'adonne à la marche ou la course à pied, le faisceau devient mixte: large au niveau des pieds et focalisé pour voir à quelques mètres et anticiper le relief. En outre, lorsque l'utilisateur se trouve en situation de vision lointaine, il relève la tête pour voir au loin et rechercher par exemple une balise lors d'une course à pied ou encore un relais accroché à une paroi ; la puissance d'éclairage augmente considérablement et le faisceau devient focalisé pour assister au mieux l'utilisateur de la lampe.

Au-delà de ces avantages de praticité, on note surtout que la technique d'éclairage *réactif* ou *dynamique* s'est montrée à l'usage particulièrement économe et permet d'accroître avantageusement l'autonomie des batteries puisque sa mise en œuvre, sous le contrôle d'un calculateur, vise à optimiser la consommation des batteries, offrant ainsi une plus grande autonomie de la lampe.

Mais la problématique de la gestion de la durée de vie de la batterie n'est évidemment pas réduite à un type de lampe bien précis.

La demande de brevet EP21164886.0 déposée le 25 Mars 2021 par la demanderesse de la présente demande de brevet et publiée sous la référence EP4064792 (réf interne 313ep-ZED22ep) décrit une amélioration supplémentaire de cette technique d'éclairage réactif au moyen d'une intégration d'un accéléromètre qui permet de déterminer, au moyen d'une analyse statistique des données d'accélérométrie, un profil d'activité circonstancié autorisant un paramétrage optimal de la technique d'éclairage dynamique en fonction d'un profil automatiquement identifié.

La venue de telles lampes frontales requiert la mise au point d'une gestion de l'autonomie de la batterie plus performante, plus ergonomique et à la hauteur de la praticité de telles lampes.

Tel est le problème à résoudre par la présente invention.

### Résumé de l'invention

La présente invention a pour but de proposer un nouverau système de gestion de l'autonomie de la batterie d'une lampe frontale qui tire avantage des possibilités offertes par un accéléromètre présent dans cette dernière.

Un autre but de la présente invention est de fournir une interface utilisateur nouvelle et économique qui permet une gestion simple et efficace de la durée de vie de la batterie d'une lampe frontale.

C'est un autre but de la présente invention que de réaliser une lampe frontale doté d'un accéléromètre qui est configurée pour apporter une programmation performante de l'autonomie d'une batterie.

L'invention réalise ces buts au moyen d'une lampe dotée d'une batterie, telle qu'une lampe frontale, comportant
- une source lumineuse;
- un bouton poussoir pour la commande de la lampe ;
- un module de puissance pour générer une alimentation en courant de la source lumineuse,
- un afficheur à M segments servant à l'affichage de l'état de charge de la batterie ;
- un module de commande pour le réglage de l'intensité lumineuse générée par ladite source lumineuse;
- un accéléromètre configuré pour fournir à intervalles réguliers des données représentatives d'une accélération de la lampe frontale suivant au moins un axe horizontal X1 et un axe vertical Y1.

Le module de commande est configuré pour stocker et traiter numériquement les données représentatives de ladite accélération et pour effectuer un traitement numérique desdites données d'accélérométrie captées dans le but de détecter un ensemble de N>2 tapotements consécutifs et, consécutivement à ladite détection d'entrer dans un mode de programmation d'une autonomie de la batterie. Dans ce mode de programmation, le module de commande procède, pour chaque nouvelle pression de l'utilisateur sur le bouton poussoir, à un défilement circulaire de l'affichage desdits segments LED , chacun desdits segments LED correspondant à une unité d'autonomie par exemple une heure..

De préférence, la sortie du mode de programmation est réalisée au terme d'une durée prédéterminée.

Dans un mode de réalisation particulier, M=5 et N=4 et l'unité d'autonomie est l'heure.

Dans un mode de réalisation particulier, le module de commande est en outre configuré pour effectuer un traitement numérique desdites données d'accélérométrie captées suivant au moins un axe horizontal pour la détection d'un double tapotement et, suite à cette détection, pour commander un accroissement temporaire de la luminosité de la lampe.

Dans un mode de réalisation particulier, la lampe frontale comporte un capteur de lumière permettant de capter la lumière de l'environnement du porteur de la lampe et le module de commande est configuré pour commander la luminosité de la source lumineuse en fonction de l'information générée par le capteur de lumière.

L'invention permet également la réalisation d'un procédé de commande d'une lampe frontale comportant les étapes consistant à :
- générer au moyen d'un accéléromètre des données d'accélérométries suivant un ou plusieurs axes µx, µy et µz
- stocker lesdites données d'accélérométries au sein d'une mémoire de stockage ;
- traiter les données d'accélérométrie de manière à détecter un ensemble de N>2 tapotements consécutifs sur la lampe ;
- en cas de détection de cette dite séquence de quatre tapotements, entrer dans un mode de programmation d'une autonomie d'une batterie de ladite lampe ;
- afficher la valeur courante de la programmation de ladite autonomie sur un afficheur à M segments, chaque segment affiché correspondant à une unité de temps d'autonomie ; et
- démarrer une temporisation prédéterminée ;
- détecter un ou plusieurs appui(s) sur ledit bouton poussoir de la lampe frontale et en réponse à la dite détection procéder à une modification de l'affichage dudit afficheur pour rajouter une unité de temps à la programmation courante pour chaque appui et, lorsque la valeur courante est déjà la valeur maximale, pour revenir à une valeur minimale d'une programmation d'autonomie correspondant à une unité de temps ; et
- tester la fin de la temporisation ; et
- sortir du mode de programmation et appliquer la nouvelle valeur courante de la durée d'autonomie nouvellement programmée.

De préférence, M=5 et N=4 et la durée d'autonomie est fixée à 1 heure.

### Description des dessins

D'autres caractéristiques, but et avantages de l'invention apparaîtront à la lecture de la description et des dessins ci-après, donnés uniquement à titre d'exemples non limitatifs. Sur les dessins annexés :
La figure 1 illustre le schéma de principe de l'éclairage dynamique ou réactif connu dans l'état de la technique.
La figure 2 représente une architecture générale d'une lampe frontale incorporant un capteur de luminosité ainsi qu'un capteur accélérométrique, et adapté pour la mise en œuvre des étapes de procédé d'un mode de réalisation de la présente invention.
La figure 3 illustre un premier procédé de réalisation permettant une commande temporaire d'accroissement de luminosité.
La figure 4 illustre un mode de réalisation particulier d'une architecture générale du traitement des données d'accélérométrie dans le but d'extraire un vecteur accélérométrique de référence susceptible d'être associé à un code de commande.
La figure 5 illustre un procédé d'apprentissage d'une lampe frontale basée sur une analyse des données d'accélérométrie extraites du capteur accélérométrique, en vue d'enregistrer une instruction de commande en relation avec un tapotement prédéterminé défini conjointement par un ou plusieurs doigts de l'utilisateur.
La figure 6 illustre un procédé de commande d'une lampe frontale basée sur une analyse des données d'accélérométrie extraites du capteur accélérométrique, en vue d'une extraction d'une instruction de commande et de son exécution automatique.
La figure 7 illustre une vue perspective d'une lampe comportant un mode de gestion de la durée d'autonomie conforme à un mode de réalisation de l'invention.
La figure 8 illustre un procédé de gestion de la durée d'autonomie conforme à un mode de réalisation de l'invention.

### Description des modes de réalisation préférés

L'on décrit à présent comment l'on parvient à programmer une autonomie d'une lampe frontale sans nécessiter de composants complexes et coûteux, et ce grâce à une interface utilisateur simple et néanmoins très efficace utilisant un capteur accélérométrique généraux des signaux d'accélérométrie, tel que connu d'une lampe frontale décrite dans la demande de brevet européen EP21164886.0 dont le contenu est intégré dans la présente demande par simple référence.

Cette interface utilisateur pourra évidemment être utilisée avantageusement dans une lampe frontale avec un « *éclairage dynamique* »*,* comme on va le voir dans le mode de réalisation décrit, mais dans toute lampe frontale quelconque.

### I. Architecture générale d'un mode de réalisation

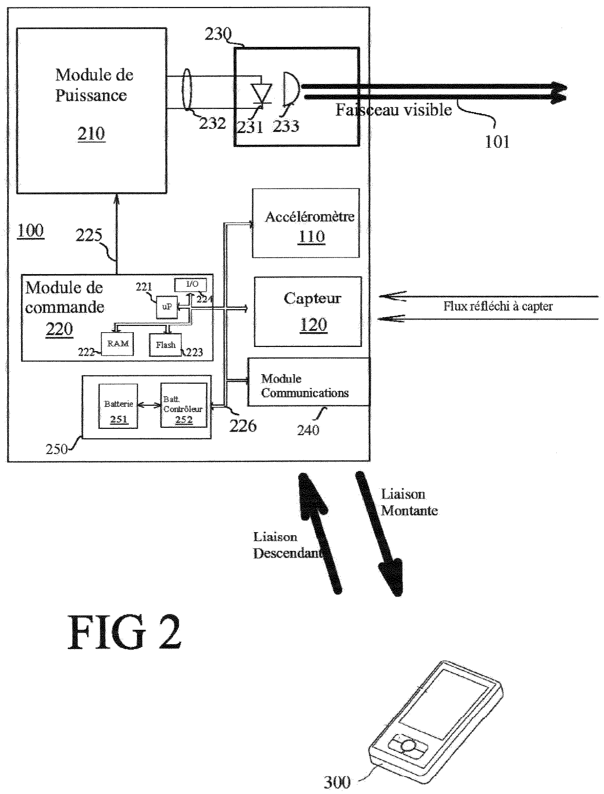

La **figure 2** illustre l'architecture physique générale d'un mode de réalisation d'une lampe 100 - supposée frontale - comportant dans un mode de réalisation particulier un système de régulation réactif ou dynamique de l'intensité lumineuse basé sur un capteur 120 permettant de mesurer la luminosité ambiante et/ou une partie du flux réfléchi par l'éclairage de la lampe frontale.

La lampe 100 comporte un capteur accélérométrique, et de préférence un capteur d'accélération tridimensionnelle (3D) 110 permettant de générer des informations d'accélérométrie suivant au moins un axe et de préférence trois axes X1, Y1, Z1, les axes X1 et Z1 étant horizontaux et l'axe Y1 étant vertical.

Plus spécifiquement, la lampe 100 comprend un module de puissance 210 associé à un module de commande 220 et une unité d'éclairage 230 comportant au moins une diode électroluminescente LED et, optionnellement, un module émetteur-récepteur 240 couplé au module de commande et un module de batterie 250 lui aussi couplé au module de commande 220.

Dans l'exemple de la figure 2, l'unité d'éclairage 230 comporte une unique diode LED 231 dotée de son circuit d'alimentation 232 connecté au module de puissance 210. Clairement, plusieurs diodes pourront être envisagées pour l'obtention d'un faisceau de forte luminosité. D'une manière générale, la ou les diodes LED(s) peuvent être associée(s) à une optique focale propre 233 permettant d'assurer une collimation du faisceau lumineux généré.

Dans un mode de réalisation spécifique, l'alimentation en courant de la diode LED 231 via le circuit 232, est effectuée par le module de puissance sous la commande d'une information ou d'un signal de commande généré par le module de commande 220 via un lien qui pourra prendre la forme d'un conducteur ou d'un ensemble de conducteurs constituant un bus. La figure montre plus particulièrement l'exemple particulier d'un conducteur 225.

Le module de puissance 210 comporte spécifiquement tous les composants que l'on rencontre conventionnellement dans une lampe d'éclairage à LEDs pour la production d'un faisceau lumineux de forte intensité, et en général basée sur la Modulation en Largeur d'Impulsion MLI (ou *Pulse Width Modulation* dans la littérature anglo-saxonne), bien connue d'un homme du métier et similaire à celle que l'on rencontre dans les circuits audio de classe D. Cette modulation MLI est commandée au moyen du signal de commande 225 généré par le module de commande 220. D'une manière générale, l'on notera que le terme "*signal*" mentionné précédemment renvoie à une grandeur électrique - courant ou tension - permettant de provoquer la commande du module de puissance, et notamment la modulation MLI servant à alimenter en courant la diode LED 231. Il ne s'agit ici que d'un mode particulier de réalisation, étant entendu qu'il sera possible de substituer au *"signal de commande* 225" toute *"information de commande",* par exemple une information logique stockée dans un registre et transmise comme cela a été dit par tout moyen approprié au module de puissance 210 dans le but de commander la puissance d'émission du faisceau lumineux. Le signal de commande peut donc être émis sur différents supports selon qu'il s'agit d'un signal ou d'une information. Ces supports peuvent être une ligne de communication de type bus couplant le module de commande et le module de puissance ou un simple circuit électronique de transfert d'une tension ou intensité de contrôle. Dans un mode de réalisation particulier, l'on pourra même envisager que les deux modules de commande et de puissance soient intégrés dans un même module ou circuit intégré.

Un homme du métier comprendra donc aisément que lorsque l'on se réfère à un *"signal de commande 225",* l'on englobe indistinctement les réalisations recourant à une grandeur électrique de commande - courant ou tension - ainsi que les réalisations dans lesquelles la commande est réalisée au moyen d'une information logique transmise au sein du circuit de puissance. Pour cette raison, l'on parlera ci-après indistinctement de *signal* ou *d'information* de commande.

D'une manière générale, les composants qui composent le module de puissance 210 - commutateurs et circuits - sont bien connus d'un homme du métier et l'exposé sera délibérément allégé à cet égard dans un souci de concision. De même, le lecteur sera renvoyé aux ouvrages généraux traitant des divers aspects de la modulation MLI (ou PWM).

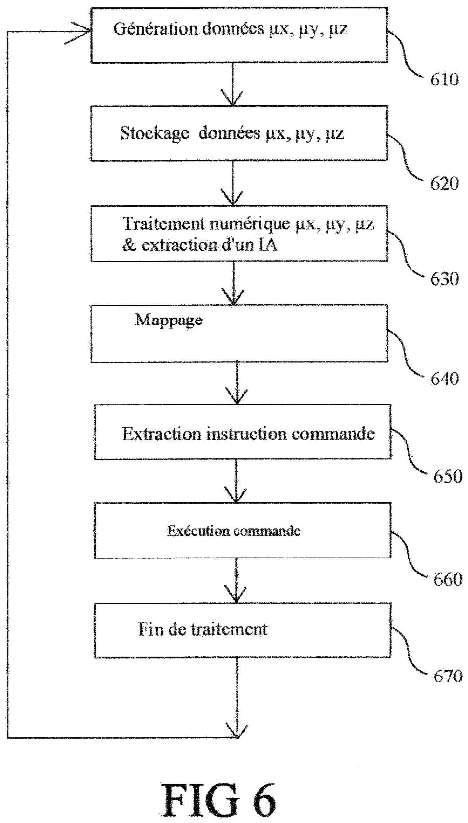

En revenant à la figure 2, l'on voit que le module de commande 220 comporte un processeur 221 ainsi que des mémoires volatiles 222 de type RAM et non-volatile (flash, EEPROM) 223 ainsi qu'un ou plusieurs circuits d'entrée/sortie 224. Les mémoires RAM et non volatiles sont destinées au stockage de données et d'instructions de microprogramme ou micro logiciel. Dans un mode de réalisation particulier, tel que décrit dans la demande de brevet européen EP21164886.0 incorporée dans la présente par simple référence, la mémoire non volatile 223 sert également au stockage de données représentatives de profils d'activités physiques qui seront utilisées conjointement avec les données d'accéléromètrie fournies par le capteur accélérométrique 110. Par ailleurs, la mémoire non-volatile 223 sera également utilisée pour le stockage d'une table de mappage qui sera décrit ci-après en relation avec la figure 6.

La lampe frontale comporte par ailleurs un module batterie 250 disposant d'un contrôleur 252 et d'une batterie 251 par exemple de type Ion-Lithium.

D'une manière générale, le module de commande 220 peut accéder à chacun des autres modules présents dans la lampe, et notamment au module de puissance 210, au module de batterie 250, aux deux capteurs de luminosité 120 et d'accélérométrie 110 ainsi que, le cas échéant, au module de communication 240 permettant une communication bi-directionnelle (montante - descendante) sans fil avec un téléphone intelligent 300 ou tout autre dispositif de communication sans fil .

De préférence, le module de commande intégrera dans sa mémoire interne des micro logiciels spécifiques permettant la mise en œuvre des procédés décrits ci-après, dans le but de réaliser une nouvelle interface utilisateur particulièrement performante et qui, de surcroît, sera programmable.

L'accès du module de commande 220 aux différents composants de la lampe frontale pourra prendre des formes diverses, soit au moyen de circuits et/ou conducteurs spécifiques ou ensembles de conducteurs formant un bus.

En accédant aux différents modules composant la lampe frontale, le module de commande 220 peut à la fois lire et collecter des informations contenues dans chacun de ces modules et/ou inversement, venir y transférer des informations, des données et/ou des commandes, et de manière plus générale implémenter les différentes étapes de procédé d'une interface utilisateur qui sera décrite plus loin de manière précise.

C'est ainsi que le module de commande 220 peut envoyer au module de puissance un signal de commande comme cela est représenté par le signal transmis sur le lien 225 et, plus généralement, peut lire la valeur courante du courant d'alimentation de la diode 231 transitant via les conducteurs 232 (via des circuits et/ou bus non représentés sur la figure).

De manière similaire, le module de commande 220 peut accéder au module de batterie 250 via le bus 226 pour y lire soit les différentes valeurs de tension (suivant le cycle charge ou décharge en cours) aux bornes de celle-ci et/ou la valeur de l'intensité délivrée afin de pouvoir en calculer un état de charge (SOC ou *State Of Charge* dans la littérature anglo-saxonne).

### II. Module de communication 240

Le module de commande 220 comporte un module de communication 240 permettant une liaison bidirectionnelle sans fil avec un système de traitement de l'information mobile ou téléphone mobile 300. Dans un mode de réalisation privilégié, l'émetteur ainsi que le récepteur seront compatibles avec le standard *Bluetooth,* de préférence avec le standard *Bluetooth 4.0 Low energy.* Dans un autre mode de réalisation, on adoptera plutôt le standard WIFI ou IEEE802.11 ou tout autre standard disponible pour une communication sans fil. Le module 240 comporte une unité bande de base (non illustrée) couplée à un récepteur et à un émetteur sans fil, permettant d'organiser un canal de communication montant (liaison montante- *Uplink*) vers le téléphone mobile 300 et, dans le sens contraire, un canal de communication descendant (*Downlink*) depuis ce même téléphone. A cet effet, le module de communication 240 peut être amené à effectuer divers traitements, en série ou en parallèle, sur la représentation numérique du signal reçu et à transmettre, et notamment, des opérations de filtrage, de calcul statistique, de démodulation, de codage/décodage canal permettant de rendre la communication robuste au bruit, etc... De telles opérations sont bien connues dans le domaine du traitement du signal, notamment lorsqu'il s'agit d'isoler une composante particulière d'un signal, susceptible de porter une information numérique, et il ne sera pas nécessaire ici d'alourdir l'exposé de la description.

Une fois détectés, ces paquets sont transférés au processeur 221 au sein du module de commande 220.

Le processeur 221 est donc chargé de l'interprétation des paquets reçus ainsi que de la mise en forme de paquets pour l'émission selon un format spécifique au standard utilisé. Ainsi dans le cas du standard Bluetooth Low Energy, ces paquets auront une structure autour du *Generic Attribute Profile* (GATT) standardisé que l'on ne détaillera pas ici. En fonction de l'interprétation des bits de données inclus dans les paquets reçus, le processeur va reconstruire les éventuelles informations ou commandes reçues sur la liaison descendante en provenance du système de traitement de l'information mobile 300. Ayant interprété ces informations ou commandes, le processeur 221 va ensuite relayer ou convertir cette information ou commande vers le module concerné. Ainsi dans le mode de réalisation de base, le processeur 221 identifie des commandes à l'attention du module de puissance 210 afin de modifier l'intensité lumineuse et en réaction à cette identification est susceptible de générer une information de commande sur le conducteur 225 à destination du module de puissance 210 afin que ce dernier procède à la modification de l'intensité lumineuse générée par l'unité d'éclairage 230.

En outre, le processeur 221 est également configuré pour identifier des requêtes de lecture émises par le système de traitement de l'information mobile associé 300 afin que la lampe frontale envoie certains paramètres vers le téléphone 300 sur la liaison montante.

Ces requêtes peuvent ainsi être une requête d'état de charge de la batterie ou de la valeur de la puissance lumineuse actuelle. Dans ce cas, le processeur 221 va récupérer les informations nécessaires directement auprès du module concerné et après avoir réalisé d'éventuels calculs supplémentaires sur ces informations pour obtenir l'information requise finale (dans le cas de l'état de charge par exemple comme précisé ci-dessus), va mettre en forme un paquet de données correspondant pour l'émission par le module émetteur-récepteur 240.

Il est clair que la figure 2 décrit un mode de réalisation préféré, et que bien d'autres modes de réalisation sont possibles et à la portée d'un homme du métier. Par exemple, dans un mode plus sophistiqué, d'autres modules pourront être ajoutés au sein de la lampe frontale et ces modules seront aussi couplés au processeur 221 via le bus 226 par exemple. Ces modules pourront alors aussi échanger en liaison montante ou descendante des données ou commandes avec le système de traitement de l'information mobile associé 300 qui pourra alors communiquer avec la lampe frontale et lui transmettre diverses commandes de configuration au moyen d'une application dédiée s'exécutant sur le téléphone intelligent. Cette application dédiée permet alors de coordonner les différentes fonctionnalités de la lampe frontale en offrant notamment une interface conviviale avec l'utilisateur au moyen de laquelle ce dernier pourra soit entrer des paramètres de fonctionnement, soit venir directement commander la lampe frontale ou sélectionner différentes options pour les fonctionnalités offertes.

Dans un mode de réalisation préféré, la lampe frontale est configurée pour entrer en communication avec le téléphone intelligent dans le but d'ouvrir une session d'apprentissage au cours de laquelle l'utilisateur pourra enregistrer une combinaison de tapotement de doigts sur la lampe frontale et associer cette combinaison à une ou plusieurs instructions de commande devant être stockées dans une table de mappage au sein de la mémoire non volatile 223.

Il en découlera alors une nouvelle possibilité d'interface utilisateur qui viendra par exemple enrichir avantageusement et améliorer le mécanisme de régulation dynamique de la lampe frontale.

### III. Régulation de l'éclairage dynamique ou réactif

Il convient de rappeler que, dans un mode de réalisation préféré, le module de commande 220 de la lampe frontale 100 met en œuvre une technique d'éclairage dynamique ou réactif. Cette technique consiste à substituer aux modes de réglages manuels bien connus - basés sur diverses valeurs de puissance lumineuse préréglées telle que *faible, moyenne* ou *forte,* une technique plus automatique permettant de laisser le réglage de la puissance lumineuse au module de commande 220 et plus spécifiquement à un algorithme de régulation exécuté par le processeur 221 sous la commande d'un micro-logiciel de régulation stocké en mémoire non volatile 223.

Suivant le principe de l'éclairage dynamique ou réactive, le processeur 221 vient régler la puissance lumineuse en fonction de la valeur de la luminosité ambiante mesurée par le capteur 120, par exemple en venant sélectionner une valeur choisie parmi un jeu de N valeurs seuils prédéfinis. Un tel mécanisme de régulation s'apparente donc à un mécanisme de réglage par pas discrets au sein d'un jeu fini de valeurs de puissance, permettant au module de commande 220 de venir piloter la lampe frontale en passant successivement d'une valeur de réglage à une autre valeur choisie dans le jeu de valeurs prédéterminées.

Avec un jeu de trois valeurs de réglage prédéterminées, correspondant à trois puissances, par exemple « *faible* »*,* « *moyenne* » ou « *forte* »*,* le mécanisme de luminosité réactif ou dynamique permet donc le réglage automatique de la lampe frontale sur la bonne valeur au sein des N valeurs prédéterminées.

De la même manière, la géométrie du faisceau lumineux pourra être réglée automatiquement par la sélection, via le module de commande 220, d'un mode de diffusion choisi parmi un jeu de plusieurs modes prédéterminés, par exemple *large, étroit,* voire même les deux en même temps.

Une telle régulation dynamique ou réactive, par pas discrets, s'avère simple et bon marché à mettre en œuvre et permet une commutation automatique entre des valeurs seuils prédéfinies.

Pour autant, un homme du métier pourra envisager un mécanisme de régulation plus sophistiqué basée sur un véritable asservissement venant intégrer la valeur de la luminosité au sein d'une boucle de contre-réaction qui pourra être linéaire ou non, afin de venir fixer la puissance du faisceau lumineux généré par le module 230. A cet égard, des mécanismes de correction d'erreur pourront être opportunément intégrés au sein de la boucle de contre-réaction, notamment une correction proportionnelle (P), proportionnelle-intégrale (PI), voire Proportionnelle intégrale différentielle (PID) etc , employées avec des paramètres adéquats.

Quel que soit le type de régulation lumineuse envisagée, par pas discrets ou au moyen d'un asservissement linéaire ou non-linéaire, la régulation de l'éclairage dynamique ou réactif pourra être avantageusement améliorée en venant introduire, comme on va le voir à présent en détail, une exploitation des données d'accélérométrie µₓ, µ_{y} et µ_{z} générées par le capteur accélérométrique tridimensionnel 110, comme cela va être décrit à présent pour venir augmenter immédiatement et significativement, sur demande de l'utilisateur, la puissance lumineuse de la lampe.

Au-delà de cet apport immédiat d'un supplément de lumière, l'on pourra même, comme on le verra plus loin, réaliser une nouvelle interface utilisateur (interface homme-machine).

### IV. Collaboration de l'accéléromètre 110 pour la réalisation d'une nouvelle interface utilisateur programmable.

La demande de brevet européen EP21164886.0 décrit l'utilisation de l'accéléromètre pour permettre l'identification de profils d'utilisation prédéterminés dans le but de permettre un paramétrage optimal automatique de la lampe frontale. Grâce aux procédés décrits dans cette demande EP21164886.0, le module de commande 220 peut identifier, à partir des données statistiques fournies par l'accéléromètre, le profil idéal correspondant au mieux à une activité considérée (course à pied, marche , bicyclette etc...) et a y appliquer un paramétrage circonstancié et idéal.

Comme cela va être décrit à présent, l'on vient à présent ajouter à ce paramétrage optimal et automatique la réalisation d'une nouvelle interface utilisateur venant exploiter les données générées par l'accéléromètre.

D'une manière générale, le module d'accélérométrie tridimensionnel 110 fournit des signaux d'accélérométrie µₓ, µ_{y} et µ_{z} suivant trois axes trigonométriques X1, Y1 et Z1 et, de manière plus spécifique, les axes X1 et Z1 sont horizontaux tandis que l'axe Y1 est un axe vertical. Par ailleurs, les axes X1 et Y1 sont disposés dans un plan sagittal relativement à l'utilisateur.

Les inventeurs de la présente demande de brevet ont observé avantageusement que, en analysant les signaux µₓ, µ_{y} et µ_{z} , les séquences rapprochées de pics sur l'axe Y1 pouvaient intervenir fréquemment, tandis que ces mêmes séquences étaient beaucoup plus rares suivant les deux axes horizontaux X1 et Z1.

Par conséquent, les inventeurs ont décidé d'exploiter cette observation en intégrant un nouvel algorithme au sein du microprogramme logé dans la mémoire non volatile 223 du module de commande 220 pour discriminer les signaux accélérométriques détectés le long des deux axes horizontaux X1, Z1 par rapport au signal accélérométrique détecté le long de l'axe vertical Y1, ceci afin de générer des données accélérométriques pertinentes mêmes lorsque la lampe est positionnée sur la tête d'un utilisateur en mouvement (marche/course). Grâce à cette discrimination entre les signaux horizontaux µₓ, µ_{z} et le signal sur l'axe vertical µ_{y}, l'on arrive à une détection sur une durée prédéfinie - de quelques centaines de millisecondes à une seconde au maximum - d'une séquence d'au moins deux impulsions ou pics dont l'amplitude dépasse un seuil prédéterminé sur l'un des deux signaux d'accélérométrie horizontaux µₓ ou µ_{z} , et d'utiliser cette détection comme élément de commande d'un accroissement temporaire et significatif de la luminosité de la lampe frrontale ( « accroissement *boost* »)

Cette détection d'un double pic ou impulsion au niveau du signal µₓ (par exemple) est effectué au moyen d'un traitement numérique approprié permettant de traiter, filtrer et stocker le signal numérique d'accélérométrie µₓ reçu de l'accéléromètre présent dans la lampe frontale.

Dans un mode de réalisation particulier, un tel filtrage numérique comporte un filtrage passe-haut permettant de déceler des variations rapides sur le signal numérique µₓ.

La détection d"un double « pic » au moins, ou double impulsion accélérométrique ayant une amplitude dépassant un niveau de seuil prédéterminé au niveau du signal µₓ, sera alors identifiée par le module de commande 220 comme étant la reconnaissance d'une « *double tape* » que ferait l'utilisateur de la lampe au moyen de ses doigts venant « tapoter » sur la lampe frontale.

Dans un mode de réalisation préféré, le module de commande utilise cette détection d'un double pic pour générer un signal de commande commandant un accroissement temporaire et significatif de la luminosité.

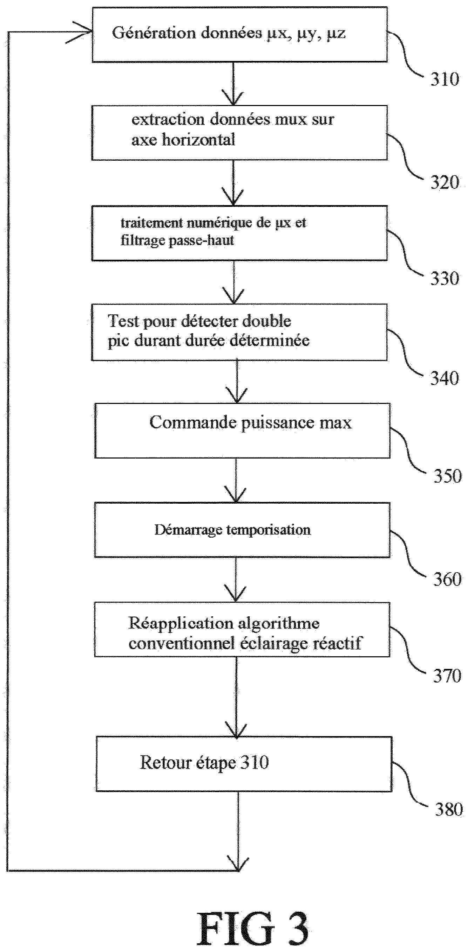

Le procédé est illustré plus particulièrement dans la figure 3 qui comporte une première étape 310 au cours de laquelle le module accélérométrique 110 génère des données d'accélérométrie µₓ, µ_{y} et µ_{z} qui sont ensuite respectivement stockées dans la mémoire vive 222 du module de commande 220.

Dans une étape 320, le processeur 221 extrait plus spécifiquement une séquence de données numérique sur au moins une composante horizontale, par exemple le signal µₓ, et stocke cette séquence spécifique dans une zone particulière de la mémoire vive 222.

Puis, dans une étape 330, le processeur procède à un traitement numérique adéquat de la séquence de données µₓ au moyen d'un microprogramme logiciel stocké en mémoire non volatile 223. En particulier, le traitement numérique comporte une série de filtrage dont un filtrage passe-haut permettant de faire apparaître des variations rapides sur le signal traité.

Le procédé procède ensuite avec une étape 340 qui est un test permettant de déterminer si, durant une durée préalablement définie, la séquence de données traitées µₓ comporte au moins un double pic significatif - ayant une amplitude dépassant un seuil prédéterminé - et qui pourrait alors être interprétée comme correspondant à une double « tapotement » effectué par un doigt de l'utilisateur suivant l'axe X1.

En cas de détection d'un tel double pic, le procédé passe alors à une étape 350 au cours de laquelle le module de commande 220 génère par l'intermédiaire de son processeur 221 un signal ou une information de commande sur le circuit 225 destiné à venir accroître significativement l'illumination de la lampe (éclairage « *boost* »)*.* Dans un mode de réalisation particulier, le procédé peut modifier également la géométrie du rayon lumineux en commutant par exemple sur la projection d'un rayon lumineux large qui vient remplacer ou s'ajouter à un rayon lumineux étroit.

Le procédé passe ensuite à une étape 360 qui est le démarrage d'une temporisation permettant de faire durer le surcroît d'éclairage *(*« *boost* ») pendant une durée prédéterminée.

Lors de l'expiration de la temporisation de l'étape 360, le procédé passe ensuite à une étape 370 dans laquelle le module de commande 220 rebascule en mode d'éclairage conventionnel, par exemple le mode réactif dans le cas où c'est le capteur de luminosité 120 qui sert à fixer la luminosité de la lampe par l'unité de commande 220, et ce possiblement en tenant compte des paramètres initiaux déterminés par les profils identifiés par le module accélérométrique 110. Cette étape 370 met donc un terme à l'éclairage « *boost* » provisoirement effectué.

Puis, dans une étape 380, le procédé boucle ensuite à l'étape de départ 310 pour effectuer le traitement d'une nouvelle analyse de données d'accélérométrie et permettre une nouvelle détection d'un double « tapotement » sur la séquence de signaux µₓ horizontaux.

Comme on le voit, le procédé de la figure 3 permet d'implémenter une nouvelle fonctionnalité, très simplement et sans nécessiter de nouveaux composants coûteux à mettre en œuvre, laquelle réalise un accroissement temporaire de la luminosité de la lampe sur demande d'un utilisateur qui n'aura besoin que de venir tapoter à deux reprises la lampe frontale suivant l'axe X1 avec son doigt. Comme le double tapotement est détecté le long d'un axe horizontal - axe X1 par exemple - la méthode se montre moins sensible au bruitage parasite qui affecte les données d'accélération détectées le long d'un axe vertical Y1, présentes lorsque l'utilisateur marche et même surtout lorsqu'il court. On obtient ainsi une interface utilisateur très performante, utilisable même lorsque la lampe frontale est portée par un utilisateur qui est en mouvement, ce qui constitue un avantage significatif par rapport aux méthodes conventionnelles.

Il en résulte une ergonomie améliorée et une simplicité d'utilisation de la lampe frontale.

Cette ergonomie améliorée est déjà un premier avantage de la présente invention.

On va voir à présent qu'il est possible de venir améliorer encore d'avantage l'ergonomie de la lampe frontale en venant incorporer un traitement numérique supplémentaire allant jusqu'à réaliser une nouvelle interface utilisateur qui, de surcroît, pourra même être programmable et ceci grâce à l'utilisation d'une table de mappage qui est stockée dans la mémoire non volatile 223 contenue dans le module de commande 220 de la lampe frontale. La table de mappage stocke des vecteurs IAR de référence (Impulsions d'Accélération de Référence) le long d'au moins deux axes devant être associés à des instructions de commande pour la commande fonctionnelle de la lampe frontale.

En effet, dans un mode de réalisation alternatif, le procédé de détection intègre un algorithme permettant de venir détecter une séquence d'impulsions sur au moins deux signaux µₓ et µ_{y} , par exemple, qui correspondrait à une double tape réalisée conjointement par plusieurs doigts dont notamment le pouce et l'index opérant suivant leur opposition morphologique naturelle, suivant plusieurs axes mais selon un angle relativement précis lié à cette morphologie nature, et qui pourra être fort avantageusement stockée en mémoire lors d'un procédé d'apprentissage dans le but de permettre, ultérieurement, un décodage d'une instruction de commande.

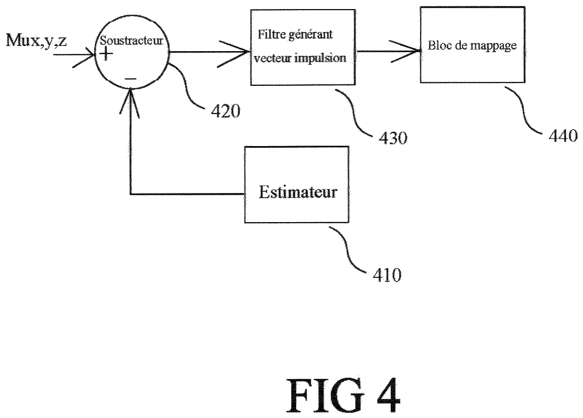

D'une manière générale, le traitement des données d'accélérométrie µₓ pourra utiliser de nombreuses techniques de traitement et de filtrage numérique bien connues d'un homme du métier. On pourra d'ailleurs traiter simultanément les trois composantes en tant que de besoin, comme cela est illustré dans le schéma d'architecture générale de la figure 4, montrant un bloc 410 recevant en temps réel les signaux µₓ, µ_{y} et µ_{z} généré par l'accéléromètre 110, lequel bloc 410 est chargé de générer un estimatif Eₓ, E_{y},et E_{z} d'un vecteur d'accélération intégrant plusieurs séquences d'itérations de manière à construire un vecteur d'accélérométrie représentatif du mouvement induit par la marche ou la course de l'utilisateur.

Ce bloc 410 est utilisé dans une boucle de contre-réaction au moyen d'un bloc soustracteur 420 qui vient soustraire au vecteur d'accélérométrie µₓ, µ_{y} et µ_{z} généré en temps réel par l'accéléromètre 110 le résultat de l'estimation Eₓ, E_{y},et E_{z} effectué par le bloc 410 afin de générer un vecteur d'accélération relatif µ'ₓ, µ'_{y} et µ'_{z} qui concentre plus spécifiquement les variations rapides des impulsions accélérométriques provenant notamment des doigts de l'utilisateur.

Un bloc de filtrage 430 traite le vecteur d'accélération relatif µ'ₓ, µ'_{y} et µ'_{z} de manière à générer un vecteur d'impulsion Iₓ, I_{y} et I_{z} qui sera présumé représentatif du tapotement rapide des doigts et pourra ensuite être transmis à un bloc de mappage 440.

Le bloc de mappage 440 effectue ensuite un mappage du vecteur d'impulsion Iₓ, I_{y} et I_{z} avec un motif représenté par un vecteur IAR qui aura été préalablement préenregistré dans une table de mappage stockée dans la mémoire non volatile de la lampe frontale durant une phase d'apprentissage. Ce motif préalablement enregistré correspondra à un mouvement de doigts préalablement défini par l'utilisateur durant la phase d'apprentissage, et associé à une instruction de commande prédéterminée.

Le résultat du mappage permet alors au bloc de commande 220 d'extraire l'instruction de commande correspondante et, ultérieurement, d'exécuter automatiquement cette instruction de commande.

Les opérations de filtrage et de traitement numérique des données d'accélérométrie pourront utiliser plusieurs variantes ou techniques de filtrage numériques qui ne seront pas détaillées plus avant afin de ne pas alourdir l'exposé. On pourra d'ailleurs avantageusement mettre en œuvre des techniques basées sur l'intellligence artificielle pour permettre d'affiner la construction du vecteur estimatif Eₓ, E_{y},et E_{z} et y discriminer les contributions propres au tapotements spécifiques apportées par le jeu de tapotement émanant du couple pouce/index suivant leur opposition morphologique naturelle.

De manière concrète, en venant reproduire à nouveau un tel motif de tapotement spécifique réalisé au moyen du couple pouce/index, le module de commande pourra décoder les données d'accélérométrie correspondantes et en extraire le code de commande correspondant stocké en mémoire lors de la phase d'apprentissage décrite précédemment.

De cette manière, la lampe frontale pourra être avantageusement commandée lors même de son utilisation durant la marche/course de l'utilisateur.

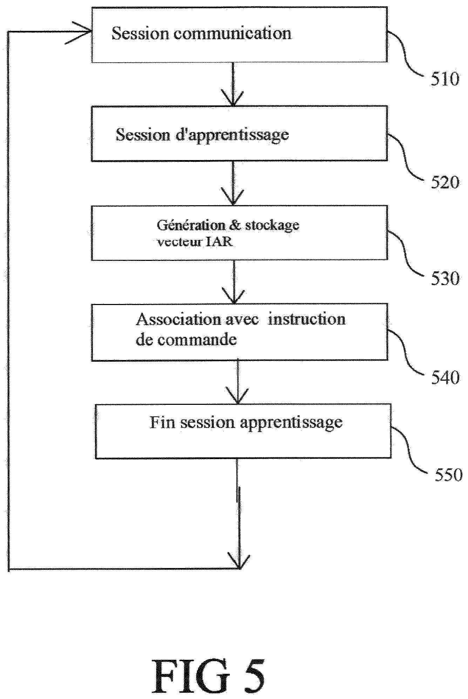

La figure 5 illustre plus spécifiquement un procédé d'apprentissage d'une instruction de commande devant être associée à un vecteur IAR stockée dans la table de mappage elle-même stockée dans la mémoire non volatile de la lampe frontale sur la base d'un traitement, d'une analyse et d'une détection de séquence d'impulsions ou pics sur les signaux d'accélérométrie µₓ, µ_{y} et µ_{z}.

Le procédé démarre par une étape 510 au cours de laquelle la lampe frontale entre dans une session de communication avec un téléphone intelligent.

Puis, dans une étape 520, le procédé entre dans une phase d'apprentissage opérant hors mouvement de la lampe frontale. Dans cette phase d'apprentissage, le module de commande 220 analyse et traite les données d'accélérométrie µₓ, µ_{y} et µ_{z} reçues en temps réel de l'accéléromètre 110 pendant que l'utilisateur opère un tapotement de référence au moyen d'un ou plusieurs doigts, et de préférence le couple pouce/index présentant une opposition morphologique naturelle qui se traduira par une corrélation particulière sur les signaux d'accélérométrie µₓ, µ_{y} et µ_{z}. Par ailleurs, des données temporelles correspondant à la fréquence de « tapotement », et propre à l'utilisateur seront également analysées et traitées durant la phase d'apprentissage.

Dans une étape 530, le module de commande 220 génère un vecteur d'impulsion accélérométrique de référence Ix, Iy, Iz (IARx,y,z) correspondant à cet apprentissage, lequel est alors stocké dans une table de mappage stockée au sein de la mémoire non volatile 223 de la lampe frontale.

Puis, dans une étape 540, le procédé procède à une association entre le vecteur IARx,y,z et une instruction de commande prédéfinie par l'utilisateur, qui pourra être par exemple un accroissement immédiat de la luminosité, voire une extinction de la lampe etc... Une telle instruction de commande est également stockée dans la table de mappage stockée dans la mémoire non volatile 223de la lampe frontale.

La phase d'apprentissage s'achève ensuite avec une étape 550 et la session de communication avec le téléphone intelligent prend fin.

En dehors du mode d'apprentissage et lorsque la lampe est dans un mode de fonctionnement, le module de commande analyse en temps réel les données d'accélérométrie µx , µy et µy reçues du capteur accélérométrique et opère un traitement et un filtrage numérique adhoc de manière à en extraire un vecteur accélérométrique correspondant à une combinaison spécifique de tapotements du couple pouce/index, le cas échéant, pour finalement être mappé avec un vecteur d'impulsation accélérométrique de référence IARx,y,z stocké en mémoire non volatile de la lampe frontale. Dès lors qu'un mappage aboutit, le module de commande extrait de la table de mappage l'instruction de commande correspondante et l'exécute.

La figure 6 illustre plus spécifiquement le procédé de commande, qui démarre avec une étape 610 au cours de laquelle le module accélérométrique génère des données d'accélérométrie µₓ, µ_{y} et µ_{z} .

Puis, dans une étape 620, le processeur 221 stocke ces données au sein de la mémoire vive 222.

Ensuite, dans une étape 630, le processeur procède à un traitement numérique adéquat de ces données µₓ, µ_{y} et µ_{z} , incluant un ou plusieurs filtrage(s) numérique(s), de manière à en extraire un vecteur d'impulsion accélérométrique IAx,y,z qui pourrait correspondre à une combinaison spécifique d'un mouvement de tapotage du couple pouce/index

Le procédé procède ensuite avec une étape 640 qui est le mappage de ce vecteur d'impulsion accélérométrique IAx,y,z extrait dans l'étape 630 avec un vecteur accélérométrique de référence IARx,y,z stocké dans la table de mappage de la mémoire 223 de la lampe frontale, et qui correspond à une combinaison prédéterminée de tapotements du couple pouce/index sur la lampe frontale. A cet effet, le vecteur courant IAx, y, z est comparé au jeu de vecteurs de références IARx, y, z qui sont stockés dans la table de mappage afin d'identifier un candidat potentiel d'un vecteur IARx, y, z qui pourrait correspondre au mouvement de tapotement de doigts pouce/index effectué par l'utilisateur de la lampe frontale.

Puis, dans une étape 650, lorsque le mappage aboutit et conduit à l'identification d'un vecteur de référence IARx, y, z, le module de commande 220 extrait l'instruction de commande associée au vecteur d'accélération de référence IARx,y,z stocké en mémoire et, dans une étape 660, la commande est exécutée automatiquement.

Puis, dans une étape 670, le procédé retourne à l'étape 610 pour le décodage potentiel d'une nouvelle commande.

Le procédé de la figure 6 vient par conséquent enrichir celui déjà décrit dans la figure 3 par l'exploitation simultanée et conjointe de tous les signaux d'accélérométrie µₓ, µ_{y} et µ_{z} générés par l'accéléromètre 110, et le mappage de ces mêmes signaux et des pics que ceux-ci comportent avec un vecteur IARx,y,z correspondant à une commande prédéfinie stockée dans la table de mappage de la mémoire non volatile de la lampe frontale.

Il est clair que, en fonction de la puissance de calcul disponible au sein du processeur 221, les algorithmes les plus performants, notamment à base d'intelligence artificielle pourront être envisagés de manière à permettre la discrimination de double ou triple tapotements effectués par les doigts d'un utilisateur sur la lampe frontale par rapport aux signaux d'accélérométrie provoqués par le mouvement de l'utilisateur (marche à pied, course, bicyclette etc...) qui seront considérés et gérés comme du « bruit » par rapport aux signaux plus rapidement de tapotements qui devront être détectés, extraits et décodés pour exécuter la commande correspondante.

### V. Mode de réalisation particulier : Interface Homme Machine (IHM) améliorée pour la gestion d'une autonomie de la batterie

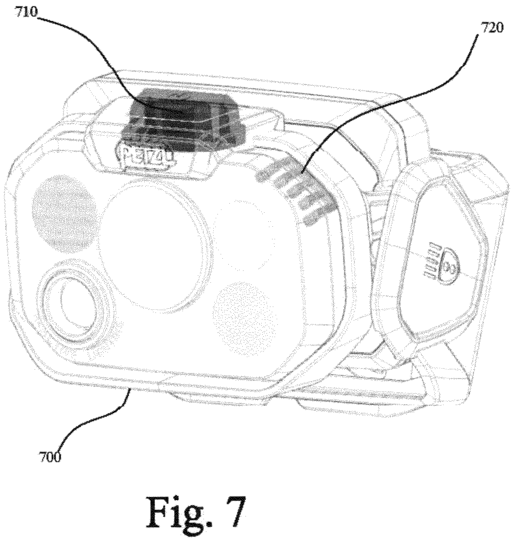

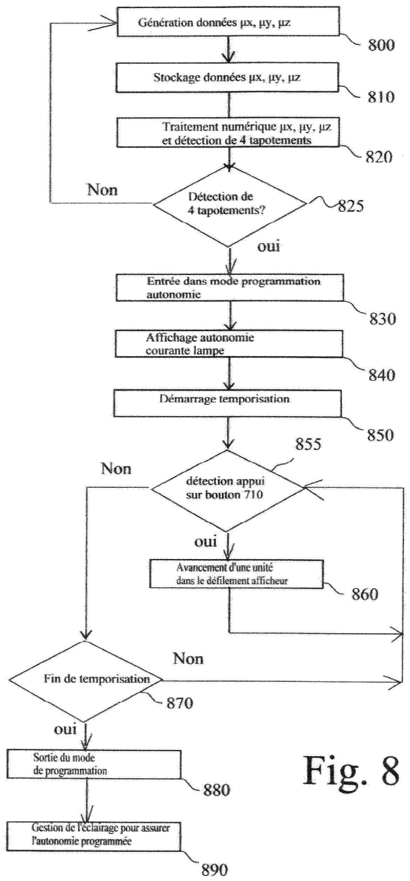

L'on décrit à présent en relation avec les figures 7 et 8 comment l'on peut venir intégrer les fonctionnalités qui ont été décrites pour réaliser une lampe présentant deux caractéristiques difficiles à combiner, à savoir :
- Une structure très simplifiée et donc économique à fabriquer ;
- Une interface utilisateur (IHM) particulièrement sophistiquée.

Comme cela apparaît dans la figure 7, la lampe frontale se présente sous la forme d'un boîtier simplifié ne comportant qu'un unique bouton de commande, par exemple un bouton poussoir BP 710 servant à la mise sous/hors tension associé à un afficheur à segments LED 720, par exemple un afficheur à cinq segments configuré pour offrir une double fonctionnalité inédite.

L'afficheur à segment LED 720 est sous la commande du module de commande 220 décrit précédemment et est configuré pour offrir deux fonctionnalités.

Une première fonction de l'afficheur 720 est celle d'un classique thermomètre visuel, permettant une visualisation directe de l'état de la batterie, suivant cinq niveaux de charge. Cette visualisation pourra intervenir, par exemple, lors de la détection d'un appui bref sur le bouton poussoir, étant entendu qu'un appui prolongé serait associé à une mise hors tension de la lampe frontale.

Une seconde fonction est celle d'une interface utilisateur IHM coopérant avec un mode inédit de programmation de l'autonomie de la batterie telle que peut la souhaiter l'utilisateur. A cet effet, le module de commande que comporte la lampe est configuré pour :
- effectuer un traitement numérique desdites données d'accélérométrie captées dans le but de détecter un ensemble de N>2 tapotements consécutifs et, consécutivement à ladite détection d'entrer dans un mode de programmation d'une autonomie de la batterie ; et
- dans ce mode de programmation, procéder à un défilement circulaire de l'affichage desdits segments LED , chacun desdits segments LED correspondant à une unité d'autonomie, de préférence un heure par segment LED affiché.

Le procédé est illustré plus spécifiquement dans la figure 8, où l'on voit qu'il démarre avec une étape 800 au cours de laquelle le module accélérométrique génère des données d'accélérométrie µₓ, µ_{y} et µ_{z} comme précédemment dans la figure 6.

Puis, dans une étape 810, le processeur 221 stocke ces données au sein de la mémoire vive 222 accessible au microprocesseur de la lampe frontale.

Ensuite, dans une étape 820, le processeur procède à un traitement numérique adéquat de ces données µₓ, µ_{y} et µ_{z} , incluant un ou plusieurs filtrage(s) numérique(s) comme décrits précédemment, de manière à détecter un ensemble de 4 tapotements consécutifs sur la lampe, suivant un axe particulier x, y ou z.

L'étape 825 est un test visant à déterminer si une telle séquence de quatre tapotements est détectée ou non.

Si une telle séquence n'est pas détectée, le procédé retourne à l'étape 800 pour une nouvelle génération de données d'accélérométrie

Au contraire, en cas de détection de cette séquence de quatre tapotements, le procédé poursuit avec une étape 830 qui est une entrée dans un mode de programmation d'une autonomie de la batterie.

Puis, dans une étape 840, le procédé procède à l'affichage courant de la programmation de l'autonomie restante sur l'afficheur 720. Pour une autonomie programmée d'une unité de temps, par exemple une heure, l'afficheur 720 n'allumera qu'une seule LED. Pour une autonomie programmée de deux heures, l'afficheur 720 allumera deux LEDs correspondant à cette autonomie et ainsi de suite. Une autonomie maximale de cinq heures provoquera un affichage de toutes les cinq LED sur l'afficheur à segments 720 etc... Une appui supplémentaire sur le bouton poussoir aurait alors pour effet de revenir à une valeur minimale d'une programmation d'autonomie.

Puis le procédé poursuit avec une étape 850 qui est le démarrage d'une temporisation prédéterminée.

Puis un nouveau test est déterminé, dans une étape 855, pour détecter un appui sur le bouton poussoir 710 de la lampe frontale.

Si un tel appui est détecté, alors le procédé poursuit avec une étape 860 au cours de laquelle la programmation de l'autonomie restante affichée - présumée être souhaitée par l'utilisateur et affichable lors de l'étape 840 - est modifiée d'une unité. Ce qui signifie que si l'afficheur 720 affichait deux LEDs allumées - représentatif d'une autonomie programmée courante égale à deux heures - l'étape 860 va provoquer l'affichage d'une troisième LED sur l'afficheur 720 afin de confirmer à l'utilisateur que la gestion de l'autonomie de la batterie va tenter de faire durer celle-ci au moins trois heures et non plus deux heures comme cela était programmé précédemment.

De manière préférée, lorsque l'affichage courant de l'afficheur 720 est positionné sur un allumage des cinq LEDs, l'avancement de l'étape 860 va conduire au retour à un affichage ne comportant qu'une seule LED affichée, ce qui est représentatif d'une gestion d'une autonomie fixée à une heure seulement.

Après l'avancement réalisé lors de l'étape 860, le procédé retourne à l'étape 855 pour la détection d'un éventuel nouvel appui sur le bouton 710.

En revanche, si l'étape 855 avait conduit à déterminer qu'aucun appui n'avait été détecté sur le bouton poussoir 710, le procédé va de l'étape 855 vers une étape 870 qui correspond à un test déterminant l'achèvement de la temporisation démarrée dans l'étape 850.

Si la temporisation n'est pas achevée, le procédé retourne vers l'étape 855 pour continuer la détection éventuelle d'un appui sur le bouton poussoir.

En revanche, en cas d'achèvement de la temporisation, le procédé passe de l'étape 870 à une étape 880 qui correspond à une sortie du mode de programmation. Alternativement, le procédé peut également sortir du mode de programmation au moyen d'une détection d'un nouveau jeu de N>2 taps consécutifs.

Puis le procédé se poursuit avec une étape 890 qui correspond à l'application d'une gestion nouvellement définie de l'autonomie de la batterie, de manière à assurer un temps d'allumage de la lampe frontale correspondant au nombre d'heures sélectionnées par l'utilisateur lors des étapes 855-860 du procédé.

Comme on le voit, la lampe frontale et le microprocesseur que celle-ci comporte, sont configurés pour permettre la programmation d'une autonomie souhaitée l'utilisateur, et ce d'une manière extrêmement intuitive et économique à réaliser en utilisant la coopération entre un unique bouton poussoir, un afficheur à n segments (n=5 de préférence) et un accéléromètre fournissant des données d'accélérométrie.

Bien évidemment, le procédé que l'on vient de décrire en relation avec la figure 8 pourra être combiné avantageusement avec le procédé de la figure 3 pour offrir, sans coût de fabrication supplémentaire, une fonctionnalité de « Boost-Tap » offrant un surcroît provisoire d'éclairage sur simple tapotement de la lampe frontale.

Bien évidemment, l'on pourra venir rendre plus sophistiquée l'interface IHM en venant programmer des « motifs » d'impulsions accélérométriques, suivant des axes et des tempi déterminés pour commander telle ou telle fonctionnalité nouvelle de la lampe frontale.

## Revendications

1. Une lampe frontale comportant (700) comportant :
- une source lumineuse;
- un bouton poussoir (710) pour la mise sous tension/hors tension de la lampe ;
- un module de puissance pour générer une alimentation en courant de ladite source lumineuse,
- un afficheur à M segments (720) servant à l'affichage de l'état de charge de la batterie ;
- un module de commande pour le réglage de l'intensité lumineuse générée par ladite source lumineuse;
- un accéléromètre configuré pour fournir à intervalles réguliers des données représentatives d'une accélération de la lampe frontale suivant au moins un axe horizontal X1 et un axe vertical Y1;
dans lequel ledit module de commande est configuré pour stocker et traiter numériquement les données représentatives de ladite accélération ;
**caractérisé en ce que** le module de commande est en outre configuré pour
- effectuer un traitement numérique desdites données d'accélérométrie captées dans le but de détecter un ensemble de N>2 tapotements consécutifs et, consécutivement à ladite détection d'entrer dans un mode de programmation d'une autonomie de la batterie ; et
- dans ledit mode de programmation, procéder suite à chaque nouvelle action sur ledit bouton poussoir à un défilement circulaire de l'affichage desdits segments LED , chacun desdits segments LED correspondant à une unité d'autonomie.

2. Lampe frontale selon la revendication 1 dans laquelle la sortie du mode de programmation est réalisée au terme d'une durée prédéterminée.

3. Lampe frontale selon la revendication 1 dans laquelle la sortie du mode de programmation est réalisée par la détection d'un nouvel ensemble de N>2 tapotements consécutifs.

4. Lampe frontale selon la revendication 1 à 3 dans laquelle M=5 et N=4 et dans laquelle ladite unité d'autonomie est l'heure.

5. Lampe frontale selon la revendication 1 dans laquelle le module de commande est en outre configuré pour effectuer un traitement numérique desdites données d'accélérométrie captées suivant au moins un axe horizontal, ledit traitement numérique comportant un filtrage passe-haut dans le but de détecter un double pic intervenant dans un délai prédéfini ;
dans lequel la détection d'un double pic intervenant dans un délai prédéfini déclenche un accroissement temporaire, durant une durée prédéfini, de la luminosité de la lampe.

6. Lampe frontale selon la revendication 1 à 5, comportant en outre un capteur de lumière permettant de capter la lumière de l'environnement du porteur de la lampe et dans lequel le module de commande est configuré pour commander la luminosité de la source lumineuse en fonction de l'information générée par le capteur de lumière.

7. Procédé de commande d'une lampe frontale telle que définie dans la revendication 1, comportant les étapes :
- générer (800) au moyen d'un accéléromètre des données d'accélérométries suivant un ou plusieurs axes µₓ, µ_{y} et µ_{z}
- stocker (810) lesdites données d'accélérométries dPuis, dans une étape 810, le processeur 221 stocke ces données au sein d'une mémoire de stockage ;
- traiter (820) lesdites données d'accélérométrie de manière à détecter un ensemble de N>2 tapotements consécutifs sur la lampe ;
- en cas de détection de cette dite séquence de quatre tapotements, entrer (830) dans un mode de programmation d'une autonomie d'une batterie de ladite lampe ;
- afficher (840) la valeur courante de la programmation de ladite autonomie sur un afficheur à M segments, chaque segment affiché correspondant à une unité de temps d'autonomie ; et
- démarrer (850) une temporisation prédéterminée ;
- détecter (860) un ou plusieurs appui(s) sur ledit bouton poussoir de la lampe frontale et en réponse à la dite détection procéder à une modification de l'affichage dudit afficheur pour rajouter une unité de temps à la programmation courante pour chaque appui et, lorsque la valeur courante est déjà la valeur maximal, pour revenir à une valeur minimale d'une programmation d'autonomie ; et
- tester (870) la fin de la temporisation ; et
- sortir (880) du mode de programmation et appliquer la nouvelle valeur courante de la durée d'autonomie nouvellement programmée.

8. Procédé selon la revendication 7 dans lequel M=5 et N=4 et dans lequel ladite unité d'autonomie est l'heure.

9. Procédé selon la revendication 7 ou 8 **caractérisé en ce qu'**il comporte en outre les étapes suivantes :
- générer (310) à intervalles réguliers un jeu de données d'accélérométrie µₓ , µ_{y} et µ_{y} fournies par ledit accéléromètre ;
- extraire (320) lesdites données suivant au moins un axe horizontal µₓ ou µ_{y} et les stocker au sein d'une mémoire vive (222);
- effectuer un traitement numérique (530) sur lesdites données stockées µₓ , µ_{y} comportant notamment un filtrage passe-haut dans le but de détecter une séquence de deux impulsions ou pics durant une durée prédéterminée ;
- en réponse à la dite détection, générer par ledit circuit de commande un signal de commande destiné à accroître la puissance lumineuise de la lampe ;
- lancer une temporisation (360) de manière à limiter dans le temps la durée d'accroissement de la puissance lumineuse ;
- rétablir le procédé de régulation lumineuse (370) au-delà de l'expiration de ladite temporisation ; et
- boucler sur la première étape pour procéder au traitement de nouvelles données d'accélérométrie.

10. Un procédé selon la revendication 9 dans lequel ledit traitement numérique (530) est utilisé pour effectuer le mappage des signaux d'accélérométrie avec une commande spécifique destinée à modifier le fonctionnement de la lampe frontale.

11. Un procédé selon l'une des revendications 7 à 10 dans lequel la lampe frontale communique avec un téléphone mobile dans le but de venir paramétrer la lampe et dans lequel la communication avec le téléphone mobile permet un apprentissage de la lampe frontale pour venir associer des profils de détections de double ou triple pics dans les signaux d'accélérométrie µₓ , µ_{y} et µ_{y} avec des mouvements spécifiques de doigts d'un utilisateur venant tapoter la lampe frontale.

12. Un procédé selon la revendication 11 dans lequel la session de communication avec un téléphone mobile comporte :
- un mode d'apprentissage opérant hors mouvement de la lampe frontale dans lequel l'utilisateur tapote la lampe frontale au moyen de l'index et du pouce, conjointement et ce tapotage est analysé, traité et filtrer par le bloc de commande de manière à générer un vecteur d'impulsion accélérométrique de référence qui est stocké en mémoire :
Dans lequel le vecteur d'impulsion accélérométrique de référence est associé à une commande de fonctionnement spécifique de la lampe frontale.

13. Un procédé selon la revendication 11 dans lequel, en dehors du mode d'apprentissage et durant l'utilisation de la lampe frontale, le module de commande analyse les données d'accélérométrie µₓ , µ_{y} et µ_{y} au moyen d'un filtrage numérique de manière à y extraire un vecteur accélérométrique susceptible d'être mappé avec un mouvement spécifique du couple index/pouce correspondant à une commande spécifique stockée en mémoire afin d'exécuter une commande correspondante extraite de la mémoire.
